# EUROPEAN PATENT APPLICATION

(11) **EP 2 566 196 A1**
(43) Date of publication of application: **06.03.2013**
(21) Application number: 11858637.9
(22) Date of filing: 01.09.2011
(51) Int. Cl.: H04W 4/02

(54) **ACTIVATION METHOD, ACTIVATION APPARATUS AND COMMUNICATION SYSTEM**

(30) Priority: 16.02.2011 CN 201110042557
(71) Applicant: Huawei Technologies Co., Ltd., Longgang Shenzhen Guangdong 518129 (CN)
(72) Inventor: ZHANG, Jinyu, Shenzhen, Guangdong 518129 (CN)
(74) Representative: Epping - Hermann - Fischer
(86) International application number: PCT/CN2011/079238
(87) International publication number: WO 2012/109893

(57) **Abstract**

An activation method includes: receiving a current location of a terminal; determining whether an application program on the terminal needs to be activated according to the current location; if the application program needs to be activated, generating an activation message; and transmitting the activation message to the terminal to activate the application program, so that the activated application program is able to modify a called number needed to be modified according to a built-in number modification rule. An activation apparatus corresponding to the activation method is further provided. With the present invention, the complexity of the user operating the called number can be reduced, and the user experience can be enhanced.

## Description

### CROSS REFERENCE

This application claims priority to Chinese Patent Application No. 201110042557.8, filed on February 16, 2011, and entitled "call method, activation apparatus and communication system", the content of which is incorporated herein by reference in its entirety.

### FIELD OF THE INVENTION

The present invention relates to the field of communication technology, and in particular, to an activation method, activation apparatus and communication system.

### BACKGROUND

With the rapid development of communication technology, more and more users communicate with others through terminals. For the purpose of enhancing user's loyalty, service providers also provide users with a wide range of services. For example, in order to enable problems from users when using businesses or services to be resolved, service providers provide users with a short number service, and users can seek for resolution by dialing the short number when being with any problem about the businesses or services, and the users can also consult about the service by dialing the short number even when roaming to a foreign country, but with the need to add a country code before the short number. For example, in order to be able to more precisely provide different users with different services, service providers may provide different short number services for different types of users, such as one short number for a local user, another short number for a roaming user, another short number for an international roaming user and so on. Although the above services bring convenience to the services of the users, it also bring inconvenience to the use of the users at the same time, for example, when a user is roaming in a foreign country, it is needed to add a country code before the called number, for example, the user needs to remember different business short numbers to obtain services of different businesses.

In order to unify the user experience, for example, enable the user to dial the same service short number directly regardless of being in a home location or a roaming location, regardless of being at home or abroad, regardless of consulting about which types of services, an existing call method can make the user dial the same service short number when being at home and roaming to abroad, in which a core network at the roaming location triggers a call to a Service Control Point (SCP: Service Control Point) of the home location through a Customized Applications for Mobile network Enhanced Logic (CAMEL: Customized Applications for Mobile network Enhanced Logic) protocol, and after the SCP of the home location determines and modifies a called number, the core network at the roaming location routes the call to the home country according to the modified called number.

As the core network at the roaming location needs to interact with the SCP at the home location through the CAMEL protocol in the above call method, when the core network at the roaming location and/or the SCP at the home location do not support the CAMEL protocol, the user can continue the call only if a correct number is input, during which the user needs operations such as adding the country code etc., which not only increases the complexity of the operation of the user, but also increases the possibility of misoperation of the user, thus reducing the user experience and influencing the user's loyalty.

### SUMMARY

The embodiments of the present invention provide an activation method, an activation apparatus and a communication system, which can reduce the complexity of the user operating the called number, and enhance the user experience.

One embodiment of the present invention provides an activation method, comprising: receiving a current location of a terminal; determining whether an application program on the terminal needs to be activated according to the current location; if the application program needs to be activated, generating an activation message; and transmitting the activation message to the terminal to activate the application program, so that the activated application program is able to modify a called number needed to be modified according to a built-in number modification rule.

Another embodiment of the present invention provides an activation apparatus, comprising: a receiving unit, configured to receive a current location of a terminal; a determination unit, configured to determine whether an application program on the terminal needs to be activated according to the current location received by the receiving unit; a generating unit, configured to generate an activation message when the determination unit determines that the application program needs to be activated; and a transmitting unit, configured to transmit the activation message generated by the generating unit to the terminal to activate the application program, so that the activated application program is able to modify a called number needed to be modified according to a built-in number modification rule.

Another embodiment of the present invention provides a communication system, comprising the activation apparatus provided by the embodiment of the present invention, where, the activation apparatus is connected to a home location register or a signaling monitoring device.

It can be seen from the above technical solution provided by the embodiments of the present invention that as the activation apparatus in the embodiments of the present invention can determine whether an application program on the terminal needs to be activated according to the received current location, and can generate an activation message to activate the application program on the terminal if it is determined that the application program on the terminal needs to be activated, so that the application program can modify a called number needed to be modified according to a built-in number modification rule, thus enabling the user to input different called numbers according to different locations or service scenes, which reduces the dialing operation of the user, reduces the complexity of the user operating the called number, and correspondingly reduces the possibility of misoperation of the user, so as to be able to enhance the user's operation experience and enhance the user's loyalty.

### BRIEF DESCRIPTION OF THE DRAWINGS

In order to more clearly illustrate the technical solutions of the embodiments of the present invention, accompany drawings which need to be used in the description of the embodiments will be simply introduced hereinafter. Obviously, the accompany drawings in the following description are merely some embodiments of the present invention, and for those of ordinary skill in the art, other embodiments can further be obtained according to these accompany drawings without contributing any creative work.

Fig. 1 is a flowchart of an activation method provided by one embodiment of the present invention;

Fig. 2 is a signaling flowchart of an activation method provided by another embodiment of the present invention;

Fig. 3 is a signaling flowchart of an activation method provided by another embodiment of the present invention;

Fig. 4 is a structural diagram of an activation apparatus provided by one embodiment of the present invention; and

Fig. 5 is a structural diagram of an activation apparatus provided by another embodiment of the present invention.

### DETAILED DESCRIPTION

The technical solutions of the embodiments of the present invention will be clearly and fully described hereinafter in combination with accompanying drawings of the embodiments of the present invention. Obviously, the described embodiments are merely a part of the embodiments of the present invention, instead of all the embodiments. Based on the embodiments of the present invention, all the other embodiments obtained by those of ordinary skill in the art without contributing any creative work belong to the protection scope of the present invention.

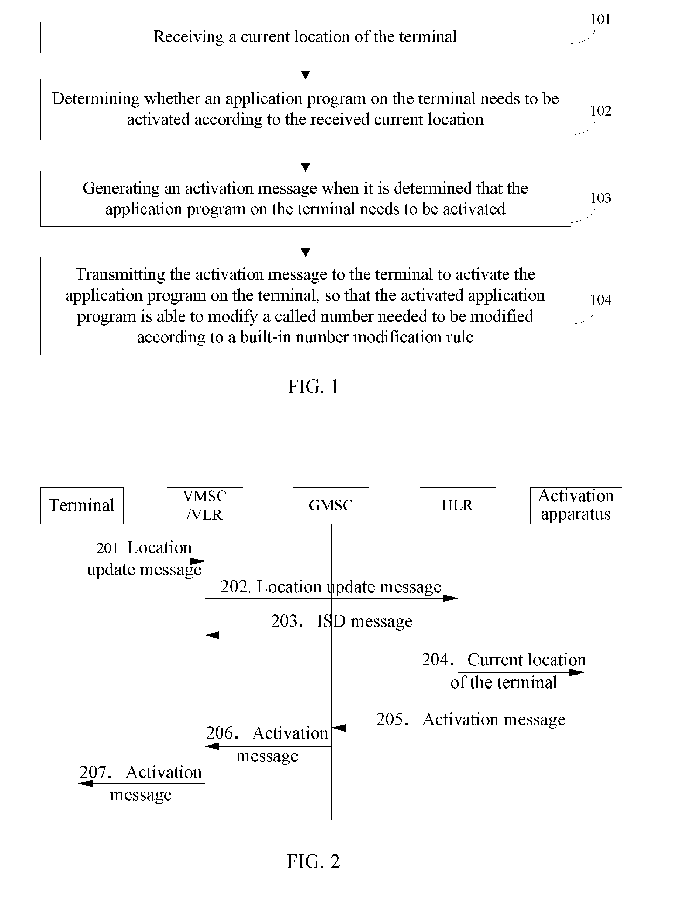

First of all, the activation method provided by the embodiments of the present invention will be introduced. Fig. 1 illustrates a flowchart of an activation method provided by one embodiment of the present invention, where, the embodiment describes a process of an activation apparatus, which is located on a network device, and is mainly used to transmit an activation message to the terminal, the activation apparatus can be a stand-alone network device, or can also be used as one functional module of existing network devices such as Gateway Mobile Switch Center (GMSC) etc., and the embodiment comprises:

101, receiving a current location of the terminal.

In one embodiment of the present invention, the received current location is from a Home Location Register (HLR), and in the embodiment, the received current location of the terminal is transmitted by the HLR after receiving a location update message from the terminal, which comprises the current location of the terminal.

In another embodiment of the present invention, the received current location of the terminal is from a signaling monitoring device, which is located at a home network to which the terminal belongs, and the locations of home network to which the terminal belongs, at which the signaling monitoring device is located may be different according to different service scenes, for example, when the signaling monitoring device monitors international roaming, the signaling monitoring device can be located on an international link; and when the signaling monitoring device monitors national roaming, the signaling monitoring device can be located on a national roaming link. In the present embodiment, the received current location of the terminal is transmitted by the signaling monitoring device after monitoring a location update message from the terminal, which comprises the current location of the terminal, and is specifically transmitted by the terminal to the HLR.

In another embodiment of the present invention, the received current location of the terminal is from the signaling monitoring device, and in the embodiment, the received current location of the terminal is transmitted by the signaling monitoring device, and specifically, is transmitted by the signaling monitoring device to the activation apparatus after monitoring an Insert Subscriber Data (ISD) message from the HLR. Where, the ISD message is specifically transmitted to the terminal when the HLR receives the location update message from the terminal corresponding to the ISD message and after the HLR updates the location successfully. In the embodiment, the signaling monitoring device can monitor the ISD message and the location update message corresponding to the ISD message at the same time, where, the current location of the terminal is from the location update message corresponding to the ISD message. After the ISD message is monitored, the signaling monitoring device then transmits the current location of the terminal to the activation apparatus, which can ensure that the HLR transmits the current location of the terminal to the activation apparatus after updating the location of the terminal successfully.

102, determining whether the application program on the terminal needs to be activated according to the received current location.

The specific determination rules differ from service usage scenario to service usage scenario, for example, in one embodiment of the present invention, the application program on the terminal needs to be activated when the terminal is roaming at abroad, and at this time, whether the terminal is roaming at abroad can be determined according to the current location, and if the terminal is roaming at abroad, it is determined that the application program on the terminal needs to be activated; otherwise, it is determined that the application program on the terminal needs not to be activated. In another embodiment of the present invention, the application program on the terminal needs to be activated when the terminal is roaming at home, and at this time, whether the terminal is roaming at home can be determined according to the current location, and if the terminal is roaming at home, it is determined that the application program on the terminal needs to be activated; otherwise, it is determined that the application program on the terminal needs not to be activated.

103, generating an activation message when it is determined that the application program on the terminal needs to be activated.

The activation message carries a preset activation parameter, which can activate an application program on the terminal. In one embodiment of the present invention, the activation message is a short message; in another embodiment of the present invention, the activation message is a message which satisfies the Hyper Text Transfer Protocol and can implement communication between a server side and a client through a General Packet Radio Service (GPRS) or a 3rd Generation (3G) channel.

104, transmitting the activation message to the terminal to activate the application program on the terminal, so that the activated application program is able to modify a called number needed to be modified according to a built-in number modification rule.

Where, in one embodiment of the present invention, the application program being activated can be the application program being capable of being executed, and only when it is needed to execute the application program, the application program is executed directly, to enable the application program to be in an operation state, and the operation of the application program can be terminated when the application program needs not to be executed. In another embodiment of the present invention, the application program being activated can be the application program being executed, i.e., the application program is in an operation state no matter whether the application program needs to be executed.

In one embodiment of the present invention, the application program on the terminal can be located in a built-in storage space or an extended storage space of the mobile phone. In another embodiment of the present invention, when there is a Subscriber Identity Module (SIM) card on the terminal, the application program can be located in the SIM card.

Where, in one embodiment of the present invention, the activated application program being able to modify a called number needed to be modified according to a built-in number modification rule specifically comprises the following flows: when a user initiates a call on a terminal, an application program in an operation state obtaining a called number; the application program determining whether the called number needs to be modified according to the built-in number modification rule, and if the called number needs to be modified, modifying the called number according to the preset number modification rule; transmitting a call request to a network element at the network side, where, the call request comprises a modified called number, so that the network element at the network side routes the call according to the modified called number. Where, the number modification rule can be different according to different services, and can also be different according to different current locations of the user; for example, a general service telephone provided by one operator to the user is 123456, an area code of the home location of the user is 0755, and a country code of the home country of the user is 086; when the user is roaming at home, the user dials 123456, and the number modification rule can be modifying the 123456 to 0755123456, so that the user can obtain a service of the home location; and when the user is roaming at abroad, the user dials 123456, and the number modification rule can be modifying 123456 to 086123456 or 0860755123456; and in order to enable the user roaming at abroad to obtain a more intimate service, the operator sets one individual service number 123456999 for the user roaming at abroad, and when the user is roaming at abroad, the user dials 123456, and the number modification rule can be modifying 123456 to 086123456999.

Where, the network elements at the network side can be different according to different service scenes, for example, when the user is roaming at a visited location, the network elements at the network side can be a Visited Mobile Switching Center/Visited Location Register (VMSC/VLR); and when the user is at the home location, the network elements at the network side can be a Mobile Switching Center/Home Location Register (MSC/HLR).

It can be seen from the above description that the activation apparatus in the embodiment can determine whether the application program on the terminal needs to be activated according to the received current location, and can generate an activation message to activate the application program on the terminal when it is determined that the application program on the terminal needs to be activated, so that the application program can modify the called number needed to be modified according to the built-in number modification rule, to make the user need not to input different called numbers according to different locations or service scenes, which reduces the dialing operations of the user, decreases the complexity of the user operating the called number, and correspondingly also reduces the possibility of the misoperation of the user, thus being able to enhance the user's operation experience, and being able to enhance the user's loyalty.

In another embodiment of the present invention, the activation apparatus can further obtain update information for the built-in number modification rule of the application program; in turn transmit an update message to the terminal, which comprises the obtained update information, so that the application program can update the built-in number modification rule of the application program according to the update information. Where, the update information obtained by the activation apparatus can be obtained by being input manually, or can also be from other network devices such as GMSC etc., so that the number modification rule can be updated according to the update of the service, thus being able to provide services for the user better and reduce the operation of the user, which can enhance the user's operation experience and enhance the user's loyalty.

Fig. 2 illustrates a signaling flowchart of an activation method provided by another embodiment of the present invention, comprising:

201, when the location of the terminal is changed, the terminal transmitting a location Update Location (UL) message to the VMSC/VLR.

Where, the location update message can be a Mobile Application Part (MAP) protocol message. The location update message comprises the current location of the terminal.

202, the VMSC/VLR transmitting the location update message to the HLR through the GMSC.

203, after the current location of the terminal is recorded, the HLR transferring user information to the VMSC/VLR by transmitting an ISD message to the VMSC/VLR through the GMSC.

204, the HLR transmitting the current location of the terminal to the activation apparatus.

Specifically, the HLR can forward the received location update message to the activation apparatus directly using the MAP protocol, to enable the activation apparatus to parse and obtain the current location of the terminal from the location update message. Of course, the HLR can also transmit the current location of the terminal to the activation apparatus directly through other messages.

205, the activation apparatus determining whether the application program on the terminal needs to be activated according to the current location of the terminal, and if the application program needs to be activated, transmitting an activation message to the GMSC.

When the activation message is a short message, in another embodiment of the present invention, the activation apparatus can also transmit the short message to a Short Message Service Center (SMSC) through a Short Message Peer to Peer (SMPP) protocol, and the SMSC then transmits the short message to the terminal.

206, the GMSC transmitting the activation message to the VMSC/VLR.

207, the VMSC/VLR transmitting the activation message to the terminal to activate the application program on the terminal, so that the activated application program is able to modify the called number needed to be modified according to a built-in number modification rule.

It can be seen from the above description that the activation apparatus in the embodiment can determine whether the application program on the terminal needs to be activated according to the received current location, and can generate an activation message to activate the application program on the terminal when it is determined that the application program on the terminal needs to be activated, so that the application program can modify the called number needed to be modified according to the built-in number modification rule, to make the user need not to input different called numbers according to different locations or service scenes, which reduces the dialing operations of the user, decreases the complexity of the user operating the called number, and correspondingly also reduces the possibility of the misoperation of the user, thus being able to enhance the user's operation experience, and being able to enhance the user's loyalty.

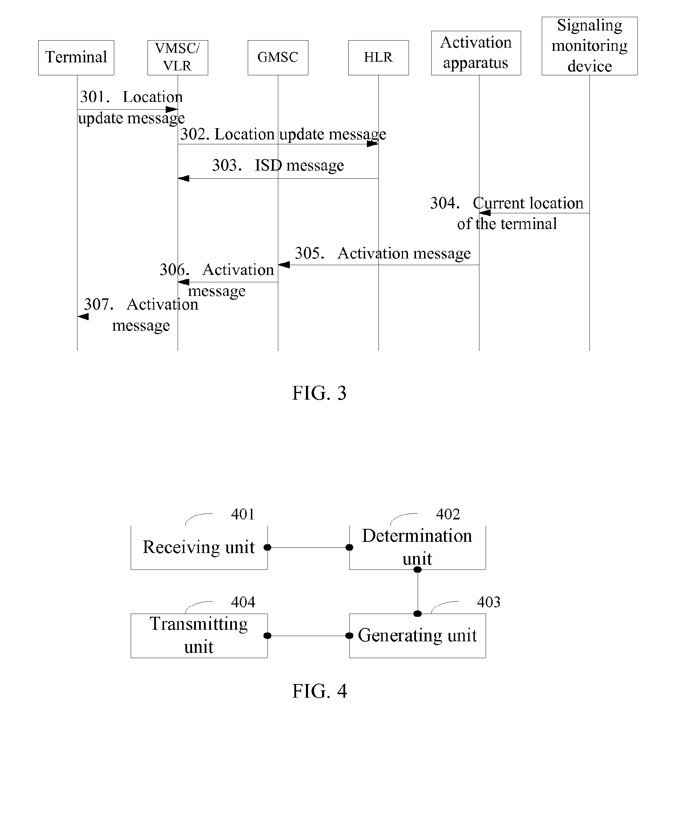

Fig. 3 is a signaling flowchart of an activation method provided by another embodiment of the present invention, comprising:

301, when the location of the terminal is changed, the terminal transmitting a location update message to the VMSC/VLR.

302, the VMSC/VLR transmitting the location update message to the HLR through the GMSC.

303, after the current location of the terminal is recorded, the HLR transferring user information to the VMSC/VLR by transmitting an ISD message to the VMSC/VLR through the GMSC.

304, the signaling monitoring device being located on an international link of the GMSC, and accessing to a link needed to be monitored. The signaling monitoring device monitors UL and ISD messages on the link, and when a location update message of a certain user and an ISD message corresponding to the location update message are monitored, it is indicated that the location of the user is successfully updated, and the signaling monitoring device analyses the location update message, to obtain the current location of the terminal, and then transmits the current location of the terminal to the activation apparatus.

305, the activation apparatus determining whether the application program on the terminal is to be activated according to the current location of the terminal, and if the application program is to be activated, transmitting an activation message to the GMSC.

306, the GMSC transmitting the activation message to the VMSC/VLR.

307, the VMSC/VLR transmitting the activation message to the terminal to activate the application program on the terminal, so that the activated application program is able to modify the called number needed to be modified according to a built-in number modification rule.

It can be seen from the above description that the activation apparatus in the embodiment can determine whether the application program on the terminal needs to be activated according to the received current location, and can generate an activation message to activate the application program on the terminal when it is determined that the application program on the terminal needs to be activated, so that the application program can modify the called number needed to be modified according to the built-in number modification rule, to make the user need not to input different called numbers according to different locations or service scenes, which reduces the dialing operations of the user, decreases the complexity of the user operating the called number, and correspondingly also reduces the possibility of the misoperation of the user, thus being able to enhance the user's operation experience, and being able to enhance the user's loyalty.

It should be illustrated that for the above described various method embodiments, in order to simplify the description, the method embodiments are described as combinations of a series of actions; however, it should be known by those skilled in the art that the present invention is not limited to the described order of the actions, since according to the present invention, some steps can be used in another order or be performed at the same time. Secondly, those skilled in the art can also know that all the embodiments descried in the specification belong to preferred embodiments, and the actions and modules which are referred to are not necessary for the present invention.

An activation apparatus provided by the embodiments of the present invention will be further described, and Fig. 4 illustrates a structure of an activation apparatus provided by one embodiment of the present invention, comprising:

a receiving unit 401, configured to receive a current location of a terminal;

a determination unit 402, configured to determine whether an application program on the terminal needs to be activated according to the current location received by the receiving unit 401;

a generating unit 403, configured to generate an activation message when the determination unit 402 determines that the application program on the terminal needs to be activated; and

a transmitting unit 404, configured to transmit the activation message generated by the generating unit 403 to the terminal to activate the application program on the terminal, so that the activated application program is able to modify the called number needed to be modified according to a built-in number modification rule.

It can be seen from the above description that the activation apparatus in the embodiment can determine whether the application program on the terminal needs to be activated according to the received current location, and can generate an activation message to activate the application program on the terminal when it is determined that the application program on the terminal needs to be activated, so that the application program can modify the called number needed to be modified according to the built-in number modification rule, to make the user need not to input different called numbers according to different locations or service scenes, which reduces the dialing operations of the user, decreases the complexity of the user operating the called number, and correspondingly also reduces the possibility of the misoperation of the user, thus being able to enhance the user's operation experience, and being able to enhance the user's loyalty.

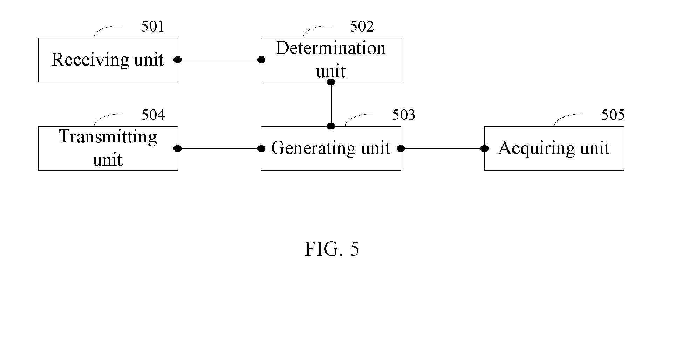

Fig. 5 illustrates a structure of an activation apparatus provided by one embodiment of the present invention, comprising:

a receiving unit 501, configured to receive a current location of a terminal;

a determination unit 502, configured to determine whether an application program on the terminal needs to be activated according to the current location received by the receiving unit 501;

an acquiring unit 505, configured to acquire update information of a number modification rule;

a generating unit 503, configured to generate an activation message when the determination unit 502 determines that the application program on the terminal needs to be activated; and generate an update message, which comprises the update information acquired by the acquiring unit 505; and

a transmitting unit 504, configured to transmit the activation message generated by the generating unit 503 to the terminal to activate the application program on the terminal, so that the activated application program is able to modify the called number needed to be modified according to the built-in number modification rule; and transmit the update message generated by the generating unit 503 to the terminal, so that the application program on the terminal updates the number modification rule according to the update information.

It can be seen from the above description that the activation apparatus in the embodiment can determine whether the application program on the terminal needs to be activated according to the received current location, and can generate an activation message to activate the application program on the terminal when it is determined that the application program on the terminal needs to be activated, so that the application program can modify the called number needed to be modified according to the built-in number modification rule, to make the user need not to input different called numbers according to different locations or service scenes, which reduces the dialing operations of the user, decreases the complexity of the user operating the called number, and correspondingly also reduces the possibility of the misoperation of the user, thus being able to enhance the user's operation experience, and being able to enhance the user's loyalty. Further, the activation apparatus can further obtain the update information of the built-in number modification rule of the application program; and in turn transmit an update message to the terminal, which comprises the obtained update information, so that the application program can update the built-in number modification rule of the application program according to the update information, to make the number modification rule be updated according to the update of the service, thus being able to provide services for the user better and reducing the operation of the user, which can enhance the user's operation experience and enhance the user's loyalty.

One embodiment of the present invention further provides a communication system, comprising: the activation apparatus provided according to the embodiments of the present invention, where, the activation apparatus can be connected to a HLR or a signaling monitoring device.

Since the contents such as information interaction, execution processes etc. between the various modules in the above apparatus and system are based on the same concept as that of the method embodiments of the present invention, the description in the method embodiments of the present invention can be referred to for the specific contents, which will not be described here further.

Those of ordinary skill in the art can understand that, all or a part of the flows of the methods in the above embodiments can be implemented by the computer programs which instruct the related hardware. The program described above can be stored in a computer-readable media, which can comprise flows such as the above embodiments of various methods when being executed. Where, the above described storage media can be a disk, disc, Read-Only Memory (ROM), Random Access Memory (RAM), etc.

The principle and the embodiments of the present invention are set forth by using the specific examples herein. The above illustration of the embodiments is only used to facilitate to understand the method or concept of the present invention. In addition, those of ordinary skill in the art can make changes to the specific embodiments and application scope based on the concept of the present invention. In conclusion, the contents of the specification should not be construed as limiting the present invention.

## Claims

1. An activation method, comprising:
receiving a current location of a terminal;
determining whether an application program on the terminal needs to be activated according to the current location;
when the application program needs to be activated, generating an activation message;
and
transmitting the activation message to the terminal to activate the application program, so that the activated application program is able to modify a called number needed to be modified according to a built-in number modification rule.

2. The activation method according to claim 1, further comprising:
acquiring update information of the number modification rule; and
transmitting an update message including the update information to the terminal, so that the application program updates the number modification rule according to the update information.

3. The activation method according to claim 1, wherein, determining whether an application program on the terminal needs to be activated according to the current location comprises:
determining whether the terminal is roaming at abroad according to the current location, and if the terminal is roaming at abroad, determining that the application program on the terminal needs to be activated; or
determining whether the terminal is roaming at home according to the current location, and if the terminal is roaming at home, determining that the application program on the terminal needs to be activated.

4. The activation method according to any one of claims 1-3, wherein, the received current location of the terminal is from a home location register; or
the received current location of the terminal is from a signaling monitoring device, which is located in a home network to which the terminal belongs.

5. The activation method according to claim 4, wherein, the received current location of the terminal is transmitted by the home location register after the home location register receiving a location update message from the terminal, and the location update information comprises the current location of the terminal.

6. The activation method according to claim 4, wherein, the received current location of the terminal is transmitted after the signaling monitoring device monitors a location update message from the terminal, and the location update information comprises the current location of the terminal.

7. The activation method according to claim 4, wherein, the received current location of the terminal is transmitted by the signaling monitoring device after the home location register monitors an insert subscriber data message from the home location register, and the current location of the terminal is obtained from a location update message corresponding to the insert subscriber data message.

8. The activation method according to any one of claims 1-3, wherein, the activation message is a short message; or
the activation message is a message which satisfies the hyper text transfer protocol and can implement communication between a server side and a client through a general packet radio service or a third generation channel.

9. An activation apparatus, comprising:
a receiving unit, configured to receive a current location of a terminal;
a determination unit, configured to determine whether an application program on the terminal needs to be activated according to the current location received by the receiving unit;
a generating unit, configured to generate an activation message when the determination unit determines that the application program needs to be activated; and
a transmitting unit, configured to transmit the activation message generated by the generating unit to the terminal to activate the application program, so that the activated application program is able to modify a called number needed to be modified according to a built-in number modification rule.

10. The activation apparatus according to claim 9, further comprising:
an acquiring unit, configured to acquire update information of the number modification rule;
the generating unit, further configured to generate an update message including the update information acquired by the acquiring unit; and
the transmitting unit, further configured to transmit the update message generated by the generating unit to the terminal, so that the application program updates the number modification rule according to the update information.

11. A communication system, comprising the activation apparatus according to claim 9 or 10, wherein, the activation apparatus is connected to a home location register or a signaling monitoring device.
